# EUROPEAN PATENT APPLICATION

(11) **EP 2 597 713 A1**
(43) Date of publication of application: **29.05.2013**
(21) Application number: 12194349.2
(22) Date of filing: 27.11.2012
(51) Int. Cl.: H01M 8/04

(54) **Fuel cell system**

(30) Priority: 28.11.2011 JP 2011258980
(71) Applicant: AISIN SEIKI KABUSHIKI KAISHA, Kariya-shi, Aichi 448-8650 (JP)
(72) Inventor: Ohkawara, Hiroki, Kariya-shi,, Aichi 448-8650 (JP)
(74) Representative: TBK

(57) **Abstract**

A fuel cell system includes a control portion. (100) which airtightly closes a passage portion (6m) provided on a fuel gas passage (6) between a shut-off valve (69, 69f, 69s) and an opening-and-closing valve (66) by closing the shut-off valve (69, 69f, 69s) and the opening-and-closing valve (66) in a state where a fuel gas from a gas source (63) is supplied to the fuel gas passage (6) by opening the shut-off valve (69, 69f, 69s) and the opening-and-closing valve (66). Thereafter, the control portion (100) performs a determination processing for determining whether a closing function of the shut-off valve (69, 69f, 69s), a closing function of the opening-and-closing valve (66), and an airtightness of the passage portion (6m) function as normal on the basis of an elapsed time elapsed from a reference timing related to the closing of the both of the shut-off valve (69, 69f, 69s) and the opening-and-closing valve (66) and a fluctuation of the pressure detected by the pressure detection element in a state where the first gas conveying source (60) is stopped.

## Description

### TECHNICAL FIELD

This disclosure generally relates to a fuel cell system. More particularly, the disclosure pertains to a fuel cell system which includes a shut-off valve for opening and closing a fuel gas passage.

### BACKGROUND DISCUSSION

A known fuel cell system in which a closed space is formed at a portion of a gas passage connected to a fuel cell and an abnormality of the gas passage is detected on the basis of a pressure level in the closed space and a level of the temperature is disclosed in JP2006-92789A (hereinafter referred to as Patent reference 1). According to the known fuel cell system of the Patent reference 1, because the temperature is taken into consideration in addition to the pressure level in the closed space paying attention to that the volume of the gas is affected by the temperature, an erroneous determination that a gas leakage occurs despite the gas leakage from the closed space is not generated can be prevented.

Another known fuel cell system is disclosed in JP2006-44653A (hereinafter referred to as Patent reference 2). According to the Patent reference 2, the fuel cell system includes a valve, a desulfurizer, and a reformer which are arranged in series on the fuel gas passage. According to the fuel cell system disclosed in the Patent reference 2, because the valve is closed after an electric power generating operation of the system stops, a closed path is formed on the fuel gas passage. Because the temperature at the closed path gradually declines, a gas volume in the closed path is reduced and the pressure level in the closed path is gradually changed to have a negative pressure. The closed path with the negative pressure may interfere with a smooth opening operation of the valve. In order to overcome the foregoing drawbacks, a valve positioned at an upstream among plural valves is temporarily opened and the fuel gas is supplied to the fuel gas passage to restrain the fuel gas passage from having the negative pressure.

According to the Patent reference 1, in a case where a completely closed space is not formed in the fuel cell system, it is difficult to detect an abnormality in airtightness of the gas passage, that is, it is difficult to detect an abnormality, for example, gas leakages. Further, in a case of a fuel cell system which uses an anode gas obtained by reforming town gas by a reforming reaction, because a level of an initial pressure of the town gas is generally low, e.g., 1.0 to 2.5 kPa, the influence by the temperature change is significant, and possibilities of erroneous determination of the abnormal airtightness is high.

According to the Patent reference 2, a control portion executes a control for eliminating the negative pressure in the fuel gas passage (negative pressure eliminating control), however, an airtightness of a plumbing and a detection of abnormality of gas leakages are not disclosed. Further, in case of gas leakages, according to the Patent reference 2, because the valve positioned at the upstream is temporarily opened to eliminate the negative pressure to supply the fuel gas to the fuel gas passage, the fuel gas supplied to the fuel gas passage may leak outside. Further, with a gas appliance to which town gas is applied, generally, series dual valves in which two valves are arranged in series are provided for the purpose of safety. However, according to the Patent reference 2, if a failure that one of the valves is maintained in an open state thereof, for example, by an entrapment of obstacles in spite of an order for closing the valve, it is difficult to detect the failure. Thus, there is a possibility that the system is operated in a long term maintaining the open state of one of the series dual valves, which is not favorable.

A need thus exists for a fuel cell system which readily determines whether a closing function of a shut-off valve provided at a fuel gas passage functions as normal and whether an airtightness at a passage portion is normal.

### SUMMARY

In light of the foregoing, the disclosure provides a fuel cell system, which includes a fuel cell including an anode and a cathode, a cathode gas passage supplying a cathode gas to the cathode of the fuel cell, a fuel gas passage supplying a fuel gas of a gas source to the anode of the fuel cell, a first gas-conveying source provided at the fuel gas passage, a shut-off valve positioned on the fuel gas passage at an upstream of the first gas conveying source, the shut-off valve selectively opening and closing, an opening-and-closing valve provided on the fuel gas passage at a downstream of the shut-off valve and the first gas conveying source, the opening-and-closing valve selectively opening and closing, a pressure detection element for detecting a physical quantity related to a gas pressure in a passage portion provided on the fuel gas passage between the shut-off valve and the opening-and-closing valve, and a control portion to which a detection signal from the pressure detection element is inputted and directly or indirectly controlling the first gas conveying source, the shut-off valve and the opening-and-closing valve. The control portion performs a determination processing for determining whether a closing function of the shut-off valve, a closing function of the opening-and-closing valve, and an airtightness of the passage portion function as normal. In the determination processing, the control portion airtightly closes the passage portion provided on the fuel gas passage between the shut-off valve and the opening-and-closing valve by closing the shut-off valve and the opening-and-closing valve to enclose the fuel gas in the passage portion after supplying the fuel gas from the gas source to the fuel gas passage by opening the shut-off valve in a state where the first gas conveying source is stopped, and thereafter determines whether the closing function of the shut-off valve, the closing function of the opening-and-closing valve, and the airtightness of the passage portion function as normal on the basis of an elapsed time elapsed from a reference timing related to the closing of the both of the shut-off valve and the opening-and-closing valve and a fluctuation of the pressure detected by the pressure detection element in a state where the first gas conveying source is stopped.

According to the construction of the disclosure, the fuel cell system which readily determines whether a closing function of the shut-off valve provided at the fuel gas passage is normal (proper) and an airtightness in the passage portion is normal (proper) can be provided.

According to another aspect of the disclosure, the determination processing is executed when an operation state is transited from an electric power generating operation of the fuel cell to a stopped state, or when a stopped state of an electric power generating operation of the fuel cell continues.

According to further aspect of the disclosure, the control portion determines that the closing function of the opening-and-closing valve fails or the airtightness of the passage portion fails when a pressure in the passage portion detected by the pressure detection element declines to be lower than a first predetermined pressure within a first predetermined time from the reference timing in the determination processing.

According to another aspect of the disclosure, a temperature at the fuel cell is assumed to be higher than a temperature in a normal temperature region in response to an electric power generating operation and when the pressure in the passage portion detected by the pressure detection element declines to be lower than a second predetermined pressure at a second predetermined time from the reference timing in the determination processing, the control portion determines that a closing function of the shut-off valve functions as normal and an airtightness of the passage portion is in a normal state.

According to still another aspect of the disclosure, the shut-off valve includes a first shut-off valve provided at an upstream side and a second shut-off valve provided at a downstream side, the first and second shut-off valves provided on the fuel gas passage in series adjacent each other. The control portion airtightly closes a first passage portion provided on the fuel gas passage between the opening-and-closing valve and one of the first and second shut-off valves to enclose the fuel gas into the passage portion by closing said one of the first and second shut-off valves and the opening-and-closing valve in a state where the first and second shut-off valves and the opening-and-closing valve are open and the fuel gas from the gas source is supplied to the fuel gas passage, thereafter, executes a first determination processing for determining whether a closing function of said one of the first and second shut-off valves, the closing function of the opening-and-closing valve, and an airtightness of the first passage portion function as normal on the basis of an elapsed time elapsed from the reference timing and a fluctuation of a pressure detected by the pressure detection element, the control portion further airtightly closes a second passage portion provided on the fuel gas passage between the opening-and-closing valve and the other of the first and second shut-off valves to enclose the fuel gas in the second passage portion by closing the opening-and-closing valve and by closing the other of the first and second shut-off valves in a state where the first and second shut-off valves are open and fuel gas from the gas source is supplied to the fuel gas passage, and thereafter executes a second determination processing for determining whether a closing function of said the other of the first and second shut-off valves, the closing function of the opening-and-closing valve, and an airtightness of the second passage portion function as normal on the basis of an elapsed time elapsed from the reference timing and a fluctuation of a pressure in the second passage portion detected by the pressure detection element.

According to further aspect of the disclosure, the control portion executes the determination processing when the opening-and-closing valve is closed, the first gas conveying source is stopped, and before an activation of the fuel cell where the fuel cell is not generating an electric power.

According to still further aspect of the disclosure, the control portion outputs a command for alternately repeating the opening and closing of the shut-off valve for plural times to the shut-off valve when the determination processing determines that at least one of the closing function of the shut-off valve, the closing function of the opening-and-closing valve, and the airtightness of the passage portion fails, and thereafter the control portion re-executes the determination processing.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a schematic view of a fuel cell system around a fuel gas passage according to a first embodiment disclosed here;

Fig. 2 is a schematic view of a fuel cell system around a fuel gas passage according to a fourth embodiment disclosed here;

Fig. 3 is a flowchart for a control law executed by a controller according to a sixth embodiment disclosed here;

Fig. 4 is a flowchart for a control law executed by the controller according to a seventh embodiment disclosed here;

Fig. 5 is a flowchart for a control law executed by the controller according to an eighth embodiment disclosed here;

Fig. 6 is a flowchart for a control law executed by the controller according to a ninth embodiment disclosed here;

Fig. 7 is a flowchart for a control law executed by the controller according to a tenth embodiment disclosed here;

Fig. 8 is a flowchart for a control law executed by the controller according to an eleventh embodiment disclosed here;

Fig. 9 is a schematic view of a fuel cell system according to a twelfth embodiment disclosed here; and

Fig. 10 is a view showing a relationship in association with the controller.

### DETAILED DESCRIPTION

Embodiments of a fuel cell system will be explained with reference to illustrations of drawing figures as follows.

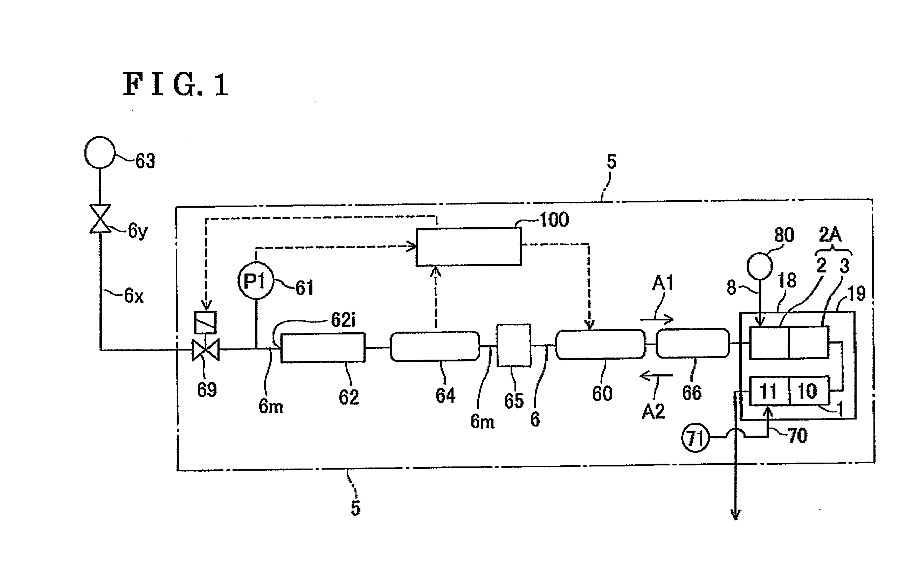

A first embodiment of the fuel cell system will be explained as follows. Fig. 1 shows the fuel cell system. The fuel cell system includes a fuel cell 1 including an anode 10 and a cathode 11, a cathode gas passage 70 supplying cathode gas (generally, an air is applied) to the cathode 11 of the fuel cell 1, a fuel gas passage 6 supplying fuel gas to the anode 10 of the fuel cell 1, a first gas pump (i.e., serving as a first gas conveying source; also referred to as 1^{st} pump) 60 provided at the fuel gas passage 6, a shut-off valve 69 provided at an upstream of the first gas pump 60 on the fuel gas passage 6, that is, provided at an inlet side of the fuel gas passage 6, a pressure sensor (i.e., serving as a pressure detection element) 61 detecting a gas pressure at a passage portion 6m of the fuel gas passage 6, a controller (i.e., serving as a control portion) 100 to which a detection signal from the pressure sensor 61 is inputted and for controlling the first gas pump 60 and the shut-off valve 69, and a case 5 housing the fuel cell 1, the cathode gas passage 70, the fuel gas passage 6, the first gas pump 60, the shut-off valve 69, the pressure sensor 61, and the controller 100.

The fuel gas passage 6 is configured to supply the fuel gas which is before reforming (e.g., town gas) to a reformer 2A. As shown in Fig. 1, at the fuel gas passage 6, the shut-off valve 69, the pressure sensor 61, a desulfurizer 62 for desulfurizing the fuel gas, a flow meter 64, a buffer tank 65, the first gas pump 60, a check valve (i.e., serving as an opening-and-closing valve) 66, and an electric power generating module 18 are arranged in series from the inlet side in the mentioned order. The arrangement is not limited to the foregoing order. When the first gas pump 60 is actuated, a level of the pressure applied to the passage portion 6m to act on the check valve 66 exceeds a relief pressure of the check valve 66, thus the check valve 66 is released to open. On the other hand, when the first gas pump 60 in actuation is stopped, the pressure at the passage portion 6m which acts on the check valve 66 is declined to be lower than the relief pressure of the check valve 66, thus the check valve 66 is automatically closed by means of a built-in spring. A gas piping 6x connected to a gas source 63 and an initial pressure valve 6y connected to the gas source 63 are provided at an upstream of the shut-off valve 69. The gas source 63 and the initial pressure valve 6y are positioned outside the case 5.

As shown in Fig. 1, the electric power generating module 18 includes the reformer 2A connected to the fuel gas passage 6, the fuel cell 1 provided at a downstream of the reformer 2A, and a thermal insulation wall 19 enclosing the fuel cell 1 and the reformer 2A. The reformer 2A is connected to a water supply passage 8. The reformer 2A includes an evaporator 2 heating a liquid-phase reforming water conveyed by a water pump (i.e., serving as a reforming water conveying source) and the reforming portion 3 for reforming the fuel gas as an anode gas including hydrogen by the water vapor generated at the evaporator 2 (reform reaction). The check valve 66 allows the fuel gas to flow from the first gas pump 60 to the reformer 2A of the electric power generating module 18 in an arrowed direction A1, however, blocks a gas flow in an opposite direction (i.e., an arrowed direction A2). The pressure sensor 61 is provided between the shut-off valve 69 and the desulfurizer 62 at the fuel gas passage 6. This is for detecting a pressure (negative pressure) at an upstream side of the fuel gas passage 6 as much as possible to complete a determination processing fast. In those circumstances, the position of the pressure sensor 61 is not limited to the foregoing position. The pressure sensor 61 may be positioned at any position between the shut-off valve 69 and the check valve 66. A second gas pump (i.e., serving as a second gas conveying source; also referred to as a cathode gas pump) 71 for conveying the cathode gas to the cathode 11 of the fuel cell 1 is provided at the cathode gas passage 70. A detection signal detected by the pressure sensor 61 and a detection signal detected by the flow meter 64 are inputted into the controller 100. The controller 100 controls devices, for example, the shut-off valve 69, the first gas pump 60, the second gas pump (cathode gas pump) 71, and the water pump 80.

During the electric power generating operation by the fuel cell 1, the initial pressure valve 6y is released (opened), and further the shut-off valve 69 is in an open state, and the first gas pump 60 is actuated to convey the fuel gas from the gas source 63 to the reformer 2A of the electric power generating module 18 which is positioned at a downstream of the first gas pump 60 in arrow A1 direction. The fuel gas supplied to the reformer 2A is reformed by a reforming reaction to be an anode gas which includes the hydrogen. The anode gas is supplied to the anode 10 of the fuel cell 1. During the electric power generating operation, the second gas pump 71 is actuated to convey the cathode gas (air) to the cathode 11 of the fuel cell 1 of the electric power generating module 18. Thus, the fuel cell 1 performs an electric power generating operation to generate the electric power.

As described above, the first gas pump 60 is actuated to supply the fuel gas towards the electric power generating module 18 provided at the downstream of the first gas pump 60 in a state where the shut-off valve 69 is released (opened), thus performing the electric power generating operation. When the first gas pump 60 is actuated, the pressure at the passage portion 6m exceeds the relief pressure, thus the pressure automatically opening, or releasing the check valve 66.

According to the embodiment, when modes are changed from an electric power generating mode to a stop mode, or during a stop mode under a condition where the first gas pump 60 is stopped, the controller 100 executes the determination processing. That is, the controller 100 stops the actuation of the first gas pump 60. Upon stopping the actuation of the first gas pump 60, because the pressure acting on the check valve 66 is assumed to be lower than the relief pressure of the check valve 66, the check valve 66 is automatically closed. When the modes are changed from the electric power generating operation mode to the stop mode, or during the stop mode, the controller 100 outputs a command to close the shut-off valve 69 to the shut-off valve 69. Accordingly, the passage portion 6m of the fuel gas passage 6 defined between the shut-off valve 69 and the check valve 66 is airtightly closed to enclose (confine), or shut in the fuel gas in the passage portion 6m.

In a case where the closing performance of the check valve 66 and the airtightness of the passage portion 6m are not deteriorated, even after a predetermined time elapses from a reference timing, the fuel gas enclosed, or shut in the passage portion 6m does not leak to the outside. Thus, even when a first predetermined time (i.e., serving as a first predetermined time) TM1 (e.g., a value within a range of 10-300 seconds) elapses from the reference timing, a decline (fluctuation) of a pressure P1 at the passage portion 6m detected by the pressure sensor 61 can be restrained.

Notwithstanding, in a case where the closing performance of the check valve 66 or the airtightness of the passage portion 6m is deteriorated, the fuel gas enclosed in the passage portion 6m leaks the outside of the check valve 66 or outside of the passage portion 6m. Thus, when the elapsed time from the reference timing is assumed to be long and elapses the first predetermined time TM1, the pressure P1 detected by the pressure sensor 61 is assumed to be lower than a predetermined pressure (i.e., serving as a first predetermined pressure) Pb.

According to the embodiment, the reference timing corresponds to a reference timing in association with an operation for enclosing the fuel gas in the passage portion 6m by airtightly closing the passage portion 6m defined between an outlet of the shut-off valve 69 and an inlet of the check valve 66 at the fuel gas passage 6. Particularly, in response to a decline of the pressure at the passage portion 6m by a stoppage of the first gas pump 60, the check valve 66 is automatically closed. Thus, the reference timing can be set based on a timing at which the controller 100 outputs a command to close the shut-off valve 69. Based on a relationship between the elapsed time elapsed from the reference timing and a decline (fluctuation) of the pressure P1 detected by the pressure sensor 61, the controller 100 determines whether the closing performance (function) of the check valve 66 and the airtightness of the passage portion 6m is maintained.

According to the embodiment, when stopping the fuel cell system which is in the electric power generating operation, the shut-off valve 69 is switched from an open state to a closed state, and the first gas pump 60 which is in operation is stopped. Thus, according to another aspect, alternatively, the reference timing may be set on the basis of the timing that the controller 100 outputs a command to change the electric power generating operation mode of the fuel cell system to the stop mode. Namely, the reference timing corresponds to a timing which serves as a starting point in time of the pressure fluctuation in the passage portion 6m in which the fuel gas is airtightly enclosed.

According to the first embodiment, the determination processing is executed when stopping the electric power generating operation of the fuel cell 1. When the electric power generating operation of the fuel cell 1 is stopped, the first gas pump 60 which is in operation is stopped so as not to supply the fuel gas to the electric power generating module 18. Thus, the determination processing is readily executed without affecting the electric power generating operation of the fuel cell 1. After the shut-off valve 69 is closed, the controller 100 determines whether the pressure P1 at the passage portion 6m detected by the pressure sensor 61 is changed to be equal to or less than the predetermined pressure Pb. When the pressure sensor 61 does not change, or does not transit to be equal to or less than the predetermined pressure Pb within the first predetermined time TM1, the fuel gas in the passage portion 6m is not leaking. Thus, the controller 100 determines that the closing performance of the check valve 66 is normal and the airtightness of the passage portion 6m is normal.

On the other hand, in a case where the pressure P1 detected by the pressure sensor 61 is reduced to be equal to or lower than the predetermined pressure Pb within the first predetermined time TM1, the fuel gas at the passage portion 6m is leaking outside. Thus, the controller 100 determines that the closing performance of the check valve 66 is abnormal (fails) or the airtightness of the passage portion 6m is abnormal (fails).

In a case where the check valve 66 cannot be closed, or the airtightness of the passage portion 6m is abnormal, the pressure P1 which is a high pressure in the passage portion 6m declines to be equal to or lower than the predetermined pressure Pb. Because the check valve 66 is automatically closed when the pressure at an upstream of the first gas pump 60 is declined to be lower than the relief pressure of the check valve 66 at the fuel gas passage 6, in practice, whether the airtightness at the passage portion 6m from the shut-off valve 69 to the inlet of the check valve 66 is assured is determined. Whether the pressure in the passage portion 6m between the shut-off valve 69 and the check valve 66 at the fuel gas passage 6 is reduced is critical for the determination.

According to the embodiment, as shown in Fig. 1, because the pressure sensor 61 is provided at a downstream of the shut-off valve 69 without an interference of another member on the fuel gas passage 6, that is, because the pressure sensor 61 is provided between the shut-off valve 69 and the desulfurizer 62, the pressure sensor 61 detects a decrease of pressure at the passage portion 6m swiftly. When it is determined that the shut-off valve 69 and the passage portion 6m do not function as normal during the determination processing, in other words, when abnormality is detected at the shut-off valve 69 and the passage portion 6m, the controller 100 outputs an alarm. An alarm to an alarm system, a user, or a maintenance company or a halt in the electric power generation may be applied as the alarm.

A second embodiment will be explained hereinafter. Basically, the fuel cell system of the second embodiment includes similar advantages and effects and operation with the first embodiment. Hereinafter, differences of the second embodiment from the first embodiment will be mainly explained. According to the fuel cell system, when a command for ending the electric power generating operation of the fuel cell 1 is outputted, the controller 100 executes a stop mode (non-electric power generating state) in which an inside of the electric power generating module 18 is cooled while being assumed to have a reducing atmosphere. Thereafter, the controller 100 executes a standby mode. In the stop mode, a smaller amount of water for reforming compared to during the electric power generating operation is supplied to the reformer 2A by the water pump 80 and a smaller amount of the fuel gas compared to during the electric power generating operation is supplied to an evaporating portion 2 of the reformer 2A by the first gas pump 60 to generate a small amount of gas including the hydrogen or hydrogen gas by reforming reaction. Because the hydrogen forms the reducing atmosphere, when cooling the electric power-generating module 18, excessive oxidation within the electric power-generating module 18 is restrained, which allows to enhance durability. Further, in the stop mode, by the supply of the cathode gas to the cathode 11 of the fuel cell 1 by an actuation of the second gas pump 71, the inside of the electric power generating module 18 is cooled. When the electric power generating module 18 is cooled to be equal to or lower than a predetermined temperature, possibility of the oxidation is resolved (reversed), thus the stop mode is completed. In response to the completion of the stop mode, the controller 100 executes the standby mode (non-electric power generation state) in which unoperated states of the water pump 80, the first gas pump 60, and the second gas pump 71 are maintained until the next activation. Thus, in the standby mode, the anode gas, the cathode gas, and the water for reforming are not supplied to the electric power generating module 18.

The determination processing described above can be executed every time when the operation modes are changed from the stop mode to the standby mode. In those circumstances, when the fuel cell system is not in the electric power generation operation (e.g., in a case where the operation modes are transited from the stop mode to the standby mode when the first gas pump 60 is stopped, or when the standby mode is continued), the controller 100 may execute the determination processing.

In a case where it is determined that the airtightness of the check valve 66 and the passage portion 6m do not function as normal in the determination processing, as necessity arises, the controller 100 may execute a control for releasing jamming (jam release control) of the check valve 66 by outputting a command to repeat alternate opening and closing operations of the shut-off valve 69 for plural times.

A third embodiment of the fuel cell system will be explained as follows. Basically, the fuel cell system of the third embodiment includes similar advantages and effects and operation with the first embodiment. Hereinafter, differences of the third embodiment from the first embodiment will be mainly explained. In those circumstances, the controller 100 may re-execute the determination processing after performing the jam release control of the check valve 66 by repeating alternate opening and closing operations of the shut-off valve 69 for plural times. The determination processing is executed when the first gas pump 60 is stopped, the check valve 66 is closed, and the fuel cell 1 is not generating the electric power.

That is, in the determination processing, the control portion 100 opens the shut-off valve 69 in a state where the check valve (opening-and-closing valve) 66 is closed and supplies an initial pressure of the fuel gas from the gas source 63 to the fuel gas passage 6. Next, the control portion 100 closes the shut-off valve 69 and airtightly closes the passage portion 6m of the fuel gas passage 6 to airtightly enclose the fuel gas in the passage portion 6m. Then, the controller 100 determines whether the airtightness of the passage portion 6m and the closing function of the shut-off valve 69 function as normal on the basis of a relationship among an elapsed time elapsed from the reference timing at which the shut-off valve 69 is closed and a fluctuation (decline) of the pressure P1 detected by the pressure sensor 61.

When it is determined that the airtightness of the passage portion 6m and the closing function of the shut-off valve 69 do not function as normal, there is a possibility that an external object is jammed at the check valve 66 so that the check valve 66 cannot be completely closed and the airtightness of the check valve 66 is declined. Thus, the controller 100 re-executes the jam release control of the check valve 66 by repeating alternate opening and closing operations of the shut-off valve 69 for plural times. By executing the jam release control for multiple times, the external object which is jammed at the check valve 66 is likely to be removed, thus a possibility that a state of the check valve 66 is returned to the normal state is enhanced.

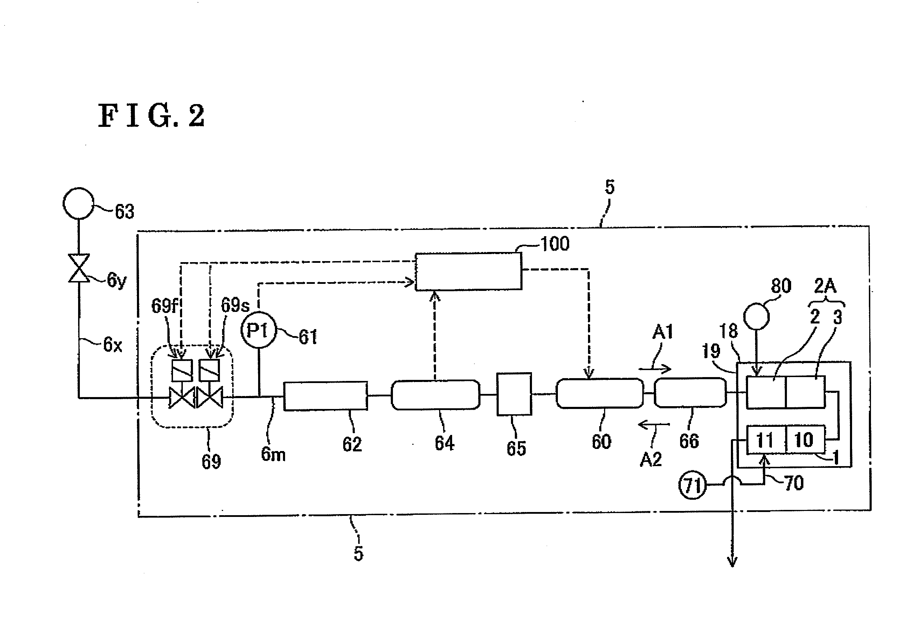

A fourth embodiment of the fuel cell system is shown in Fig. 2. Basically, the fuel cell system of the fourth embodiment includes similar advantages and effects and operation with the first embodiment. Hereinafter, differences of the fourth embodiment from the first embodiment will be mainly explained. The shut-off valve 69 according to the fourth embodiment includes a first shut-off valve 69f provided at an upstream side and a second shut-off valve 69s provided at a downstream side, which are positioned on the fuel gas passage 6 in series. In the determination processing, the controller 100 simultaneously controls the first and second shut-off valves 69f, 69s to open and close.

A first alternative example of the fourth embodiment will be explained hereinafter. Basically, the fuel cell system of the first alternative example of the fourth embodiment includes similar advantages and effects and operation with the fourth embodiment. Hereinafter, the first alternative example of the fourth embodiment is explained with reference to Fig. 2. The shut-off valve 69 includes the first shut-off valve 69f provided at an upstream side and the second shut-off valve 69s provided at a downstream side, which are positioned on the fuel gas passage 6 in series.

The controller 100 performs a first determination processing. In the first determination processing, when the first shut-off valve 69f and the second shut-off valve 69s are open and the first gas pump 60 is actuated to supply the fuel gas towards the downstream, the controller 100 executes the first determination processing. Namely, when the first gas pump 60 in actuation is stopped, the check valve 66, which is a pressure responsive check valve, is automatically closed. The controller 100 outputs a command to close the first shut-off valve 69f, first, among the first and second shut-off valves 69f, 69s. Accordingly, the fuel gas is airtightly enclosed within the passage portion 6m, or the passage portion 6m is closed by the first shut-off valve 69f. A timing that the command for closing the shut-off valve 69s is outputted is defined as a first reference timing.

After the shut-off valve 69f is closed, the controller 100 determines whether the pressure P1 at the passage portion 6m detected by the pressure sensor 61 is reduced to be equal to or lower than the predetermined pressure Pb within the first predetermined time TM1 from the first reference timing. When the pressure P1 detected by the pressure sensor 61 is not reduced to be equal to or lower than the predetermined pressure Pb within the first predetermined time TM1, the controller 100 determines that the closing function of the check valve 66 functions as normal and the airtightness at the passage portion 6m (i.e., a portion ranged from the first shut-off valve 69f to an inlet of the check valve 66) is normal.

In a case where the closing function of the check valve 66 is normal and the airtightness at the passage portion 6m is normal, the controller 100 executes a second determination processing. That is, the controller 100 executes the second determination processing when the first and second shut-off valves 69f, 69s are open and the fuel gas with initial pressure is supplied towards the downstream. Namely, under conditions that the first gas pump 60 is stopped and the check valve 66 is closed, the controller 100 outputs a command to close the second shut-off valve 69s among the first and second shut-off valves 69f, 69s. Accordingly, the fuel gas is airtightly enclosed within the passage portion 6m. A timing that the command for closing the second shut-off valve 69s is outputted is defined as a second reference timing. After closing the second shut-off valve 69s, the controller 100 determines whether the pressure P1 at the passage portion 6m detected by the pressure sensor 61 is reduced to be equal to or lower than the predetermined pressure Pb within the first predetermined time TM1 from the second reference timing. When the pressure P1 detected by the pressure sensor 61 is not reduced to be equal to or lower than the predetermined pressure Pb within the first predetermined time TM1, the controller 100 determines that the closing function of the check valve 66 is normal and the airtightness of the passage portion 6m (i.e., a portion ranging from the second shut-off valve 69s to the inlet portion of the check valve 66) is normal.

According to the first alternative example of the fourth embodiment, when it is determined that the first shut-off valve 69f does not function as normal (does not function properly) at the first determination processing, the controller 100 may execute the jam release control of the check valve 66 by outputting a command to repeat alternate opening and closing operations of the first shut-off valve 69f for plural times in a state where the gas pump 60 is in a stopped state. Thereafter, in a state where the gas pump 60 is in the stopped state the first determination processing may be re-executed. When it is determined that the second shut-off valve 69s does not function as normal (malfunctions, does not function properly) in the second determination processing, the controller 100 may execute a control for outputting a command to repeat an alternate opening and closing operation of the second shut-off valve 69s to the second shut-off valve 69s for plural times. Thereafter, the second determination processing may be re-executed.

A second alternative example of the fourth embodiment will be explained as follows. Basically, the fuel cell system of the second alternative example of the fourth embodiment includes similar advantages and effects and operation with the first alternative example of the fourth embodiment. Hereinafter, differences of the second alternative example of the fourth embodiment from the first alternative example of the fourth embodiment will be mainly explained. After closing the shut-off valve 69 (i.e., first shut-off valve 69f, second shut-off valve 69s), the controller 100 determines whether the pressure P1 at the passage portion 6m detected by the pressure sensor 61 is reduced to be equal to or lower than the predetermined pressure Pb. In a case where the pressure P1 is reduced to be equal to or lower than the predetermined pressure Pb, the controller 100 measures an elapsed time from the reference timing until a level of the pressure P1 is reduced to be equal to or lower than the predetermined pressure Pb. Based on the elapsed time, the controller 100 may determine whether the closing function of the check valve 66 and the airtightness of the passage portion 6m are normal. In a case where the elapsed time is short, it is determined that an abnormality is generated because a gas leaks from the check valve 66 and the passage portion 6m.

A fifth embodiment will be explained hereinafter. Basically, the fuel cell system of the fifth embodiment includes similar advantages and effects and operation with the embodiments explained above. Hereinafter, differences of the fifth embodiment from other embodiments will be mainly explained. The temperature at fuel cell 1 and the desulfurizer 62 during the electric power generating operation is higher than the temperature in a normal temperature region. When the electric power generating operation of the fuel cell 1 is stopped, the temperature at the fuel cell 1 and the desulfurizer 62 gradually decreases as time elapses.

Prior to the execution of the determination processing, the shut-off valve 69 and the check valve 66 are opened and the fuel gas from the gas source 63 is supplied to the fuel gas passage 6 to execute the electric power generating operation. Then, when the operation modes are changed from the electric power generating operation mode to the stop mode, the fuel gas is enclosed within the passage portion 6m defined between the closed shut-off valve 69 and the check valve 66 on the fuel gas passage 6 by closing the shut-off valve 69 and the check valve 66. The closing of the shut-off valve 69 corresponds to the airtightly enclosing of the gas and the closing timing of the shut-off valve 69 corresponds to the reference timing. Upon an elapse of a time from the reference timing after the fuel gas is airtightly enclosed in the passage portion 6m, because the temperature at the fuel cell 1 and the desulfurizer 62 gradually declines, the temperature of the fuel gas in the passage portion 6m declines. Thus, on the basis of the thermal contraction of the fuel gas in the passage portion 6m, the pressure at the passage portion 6m should be reduced. Further when the temperature at the desulfurizer 62 declines, hydrocarbon groups in the fuel gas airtightly enclosed in the passage portion 6m is adsorbed to the desulfurizer. Thus, when the operation modes are changed from the electric power generating operation mode to the stop mode, the pressure in the passage portion 6m should be reduced.

Accordingly, when the closing function of the shut-off valve 69 is normal and the airtightness of the passage portion 6m is normal, the fuel gas (i.e., fuel gas with initial pressure) and the outside air (i.e., atmosphere) do not enter the passage portion 6m. Thus, the pressure at the passage portion 6m detected by the pressure sensor 61 is reduced to be lower than a predetermined pressure Pc in response to a decline of the temperature when a second predetermined time (i.e., serving as a second predetermined time) TM2 which is longer than the first predetermined time TM1 (TM2>TM1) elapses from the reference timing. In those circumstances, the controller 100 determines that the closing function of the shut-off valve 69 and the airtightness of the passage portion 6m are normal.

On the other hand, when the closing function of the shut-off valve 69 is abnormal (in failure) or the airtightness at the passage portion 6m is abnormal (in failure), despite an output of the command for closing the shut-off valve 69, the fuel gas (fuel gas with initial pressure) or the outside air (atmosphere) enters the passage portion 6m. Thus, the pressure at the passage portion 6m detected by the pressure sensor 61 is higher than the predetermined pressure Pc when the second predetermined time TM2 which is longer than the first predetermined time TM1 (TM2>TM1) elapses from the reference timing. In those circumstances, the controller 100 determines that either the shut-off valve 69 or the passage portion 6m is in an abnormal state and the fuel gas or the outside air enters the passage portion 6m despite the fuel gas is blocked. The controller 100 may output an alarm.

A first alternative example of the fifth embodiment will be explained hereinafter. Basically, the fuel cell system of the first alternative example of the fifth embodiment includes similar advantages and effects and operation with the fifth embodiment. Hereinafter, differences of the first alternative example of the fifth embodiment from the fifth embodiment will be mainly explained. When the operated fuel cell 1 is cooled, in a case where the airtightness is normal, the pressure P1 at the passage portion 6m detected by the pressure sensor 61 should be reduced to have a negative pressure after the shut-off valve 69 is closed. The controller 100 measures an elapsed time from the reference timing until the pressure P1 is reduced to be lower than the predetermined pressure Pc. Based on the elapsed time, the controller 100 may determine whether the closing function of the first shut-off valve 69f and the airtightness of the passage portion 6m are normal. In a case where the first shut-off valve 69f and the passage portion 6m are not airtightly closed, a level of the pressure in the passage portion 6m is not reduced so that the elapsed time cannot be measured, the elapsed time is recognized as zero (0), and it is determined to be abnormal, or malfunctioning.

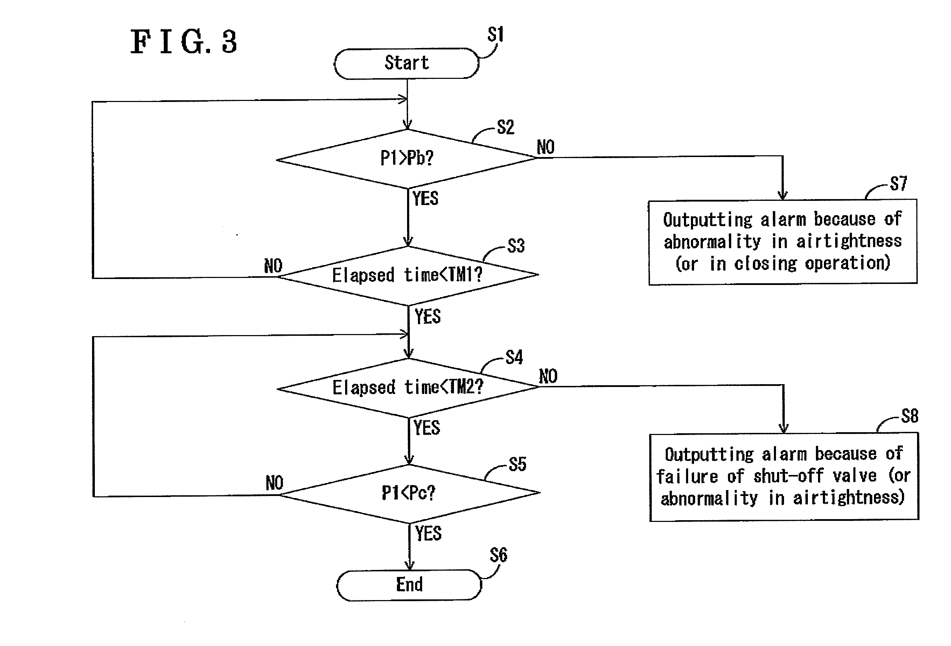

A sixth embodiment will be explained with reference to Fig. 3. Basically, the fuel cell system of the sixth embodiment includes similar advantages and effects and operation with the above-explained embodiments. Hereinafter, differences of the sixth embodiment from other embodiments will be mainly explained. Fig. 3 shows an example of a control law which the controller 100 executes. When the fuel cell system is transited from the electric power generating operation mode to the stop mode (the first gas pump 60 is stopped, the shut-off valve 69 is closed), the controller 100 starts processing following the flowchart shown in Fig. 3 at Step S1. In those circumstances, the shut-off valve 66 is closed and the gas pump 60 is stopped. At Step S2, the controller 100 determines whether the pressure P1 detected by the pressure sensor 61 is higher than the predetermined pressure Pb (P1>Pb). For example, the predetermined pressure Pb is set at a value less than, for example, 0.4kPa relative to a normal pressure of the fuel gas, for example, 1.0 to 2.5kPa, of a town gas, for example. The application of the predetermined pressure Pb is not limited to the foregoing. When the pressure P1 is declined to be equal to or lower than the predetermined pressure Pb (i.e., No at Step S2; declines in pressure level), the leakage of the gas to the outside of the passage portion 6m is generated. In those circumstances, the controller 100 determines that the closing function of the check valve 66 is abnormal (malfunctioning), or the airtightness of the passage portion 6m is abnormal (malfunctioning), and outputs an alarm (Step S7). After the alarming, it is favorable that a reactivation of the fuel cell system is prohibited.

In a case where the pressure P1 is higher than the predetermined pressure Pb (Yes at Step S2), it is determined whether the elapsed time from the reference timing at which the shut-off valve 69 is closed exceeds the first predetermined time TM1. For example, time ranged from 10 to 300 seconds is set as the first predetermined time TM1. Particularly, for example, time ranged from 40 to 100 seconds (e.g., 60 seconds) is set as the first predetermined time TM1. When the elapsed time does not exceed the first predetermined time TM1 (No at Step S3), the transaction advances to Step S2 to determine whether the pressure P1 is higher than the predetermined pressure Pb(P1>Pb). In a case where the elapsed time elapses the first predetermined time TM1 while maintaining the level of the pressure P1 to be higher than the predetermined pressure Pb (i.e., the level of the pressure is not reduced)(Yes at Step S3), the pressure in the passage portion 6m is still high, the fuel gas in the passage portion 6m does not leak outside, and the pressure P1 is not reduced to be equal to or lower than the predetermined pressure Pb. Thus, the controller 100 temporarily determines that the check valve 66 is closed as normally functions and the airtightness at the passage portion 6m is normal, then advances the transaction from Step S3 to Step S4. On the other hand, in a case where the pressure P1 is reduced to be lower than the predetermined pressure Pb within an elapse of the first predetermined time TM1, the controller 100 determines that the closing function of the check valve 66 is abnormal (malfunctioning) or the airtightness of the passage portion 6m is abnormal (malfunctioning) to output an alarm (Step S7).

In Step S4, the controller 100 determines whether the elapsed time from the reference timing at which the shut-off valve 69 is closed is longer than the second predetermined time TM2. In a case where the elapsed time from the reference timing is shorter than the second predetermined time TM2 (Yes at Step S4), the controller 100 determines whether the pressure P1 in the passage portion 6m detected by the pressure sensor 61 is less than the predetermined pressure Pc (P1<Pc)(Step S5).

In those circumstances, when the electric power generating operation of the fuel cell 1 is stopped, as the time elapses, the temperature at the electric power generating module 18 declines, thus the temperature at the passage portion 6m declines, a volume of the gas in the passage portion 6m shrinks because of the thermal contraction, and the gas pressure in the passage portion 6m declines. Further, when the electric power generating operation is stopped, the temperature at the desulfurizer 62 declines, the hydrocarbon groups (CH groups) in the fuel gas is adsorbed to the desulfurizer supported in the desulfurizer 62, and the gas pressure in the passage portion 6m further declines. The second predetermined time TM2 is set for each of the fuel cell system on the basis of the time that elapses during the pressure P1 is assumed to be lower than the predetermined pressure Pc by the decline in the pressure by means of the adsorption of the hydrocarbon groups (CH groups) to the desulfurizer due to the decline in the temperature at the desulfurizer 62 and due to the decline in the pressure in the passage portion 6m by the decline in the temperature. For example, the second predetermined time TM2 is set at a value ranged from 0.5 to 10 hours, alternatively, ranged from 1 to 5 hours. The second predetermined time TM2 is longer than the first predetermined time TM1 (TM2>TM1).

As a result of the determination at Step S5, in a case where the pressure P1 in the passage portion 6m is reduced to be lower than the predetermined pressure Pc (e.g., to have a negative pressure)(P1<Pc), it is assumed that the outside air is not in a process of entering the passage portion 6m because the shut-off valve 69 is closed as normally functions, and the passage portion 6m is airtightly closed as normally functions. Thus, the controller 100 determines that the fuel gas (fuel gas with initial pressure) or the outside air (atmosphere) do not enter the passage portion 6m, that is, the controller 100 determines that the shut-off valve 69 and the passage portion 6m are normal to set a normal flag, and complete the transaction at Step S6. In a case where the pressure P1 at the passage portion 6m is not reduced to be lower (e.g., having negative pressure) than the predetermined pressure Pc (P1≥Pc) as a result of the determination at Step S5, there is a possibility that the fuel gas (initial pressure of the fuel) and/or the outside air (atmosphere) enters the passage portion 6m. That is, the shut-off valve 69 is not closed as normally functions or the passage portion 6m is not sealed, or airtightly closed as normally functions. Thus, the controller 100 determines that there is abnormality (malfunctioning) in the airtightness of the passage portion 6m or a failure in the shut-off valve 69 in a case where the pressure P1 at the passage portion 6m is not reduced to be lower than the predetermined pressure Pc (e.g., having negative pressure) even after the elapsed time from the reference timing is assumed to be longer than the predetermined time TM2 (NO at Step S4), and thus sets a flag indicating the abnormality (malfunctioning) to output an alarm (Step S8).

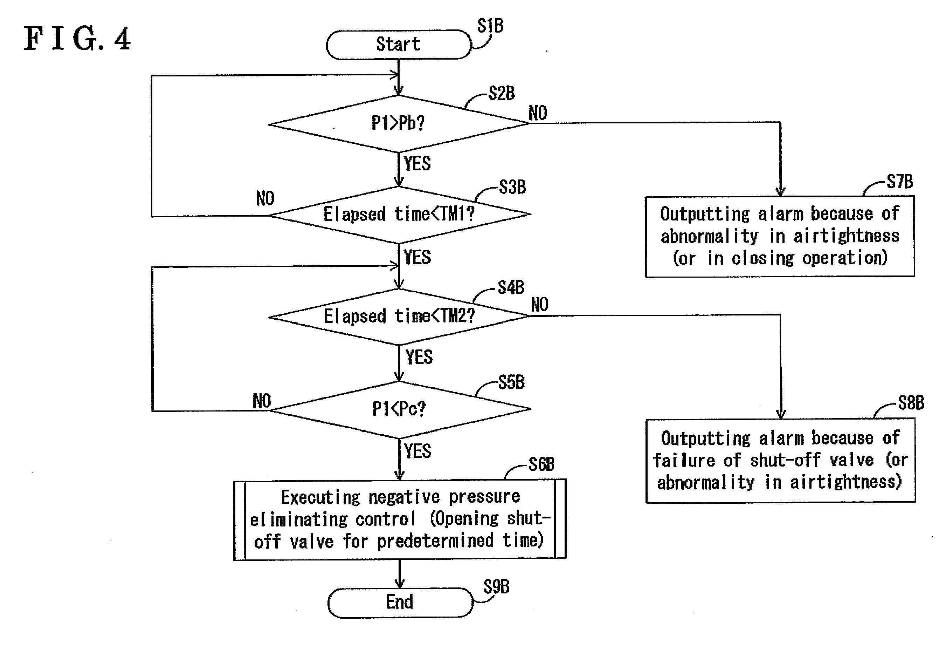

A seventh embodiment will be explained with reference to Fig. 4. Basically, the fuel cell system of the seventh embodiment includes similar advantages and effects and operation with the foregoing embodiments. Hereinafter, differences of the seventh embodiment from the foregoing embodiments will be mainly explained. Flowchart shown in Fig. 4 is similar to Fig. 3, and in order to differentiate steps in Fig. 4 from the steps in Fig. 3, character B is added to the numeral of Steps. As a result of the determination at Step S5B, in a case where it is determined that the pressure P1 is lower than the predetermined pressure Pc (P1<Pc)(YES at Step S5B), the pressure in the passage portion 6m is normally reduced (having negative pressure), the shut-off valve 69 is closed as normally functions, and the passage portion 6m is normally sealed, or airtightly closed, so that the outside air does not enter the passage portion 6m.

In those circumstances, whereas the shut-off valve 69 operates as normally functions, because the negative pressure is applied at the passage portion 6m, the shut-off valve 69 may not smoothly operate by the negative pressure. According to the seventh embodiment, the controller 100 executes a negative pressure eliminating control (Step S6B), and ends the flowchart in Fig. 4 (Step S9B). In the negative pressure eliminating control, the shut-off valve 69 (first shut-off valve 69f, second shut-off valve 69s) is opened for a predetermined time ΔTw, or until the pressure P1 is reduced to be lower than a predetermined pressure Pe, the initial pressure of the gas source 63 is applied to the passage portion 6m, and thereafter, the shut-off valve 69 (first shut-off valve 69f, second shut-off valve 69s) is closed. In those circumstances, the first gas pump 60 is stopped, the check valve 66 is closed, and the fuel gas is charged in the passage portion 6m. For example, a level of pressure (value) close to the initial pressure of the fuel gas may be applied as the predetermined pressure Pe.

In other words, in a case where the negative pressure in the passage portion 6m is maintained, there is a possibility that the operation of the shut-off valve 69 may be affected by, for example, a suction force by the negative pressure at the subsequent (next) activation of the fuel cell system, for example, as an adherence of a valve of the shut-off valve 69. Thus, according to the seventh embodiment, after determining that the shut-off valve 69 and the passage portion 6m are in normal conditions in the determination processing, the controller 100 opens the shut-off valve 69 (first shut-off valve 69f, second shut-off valve 69s) to supply the initial pressure of the source gas 63 to the passage portion 6m, and thereafter, closes the shut-off valve 69 (first shut-off valve 69f, second shut-off valve 69s) to airtightly enclose the fuel gas in the passage portion 6m. Accordingly, the passage portion 6m is restrained from having negative pressure at the next (subsequent) activation of the fuel cell, and a smoothness of an opening-closing operation of the shut-off valve 69 is ensured.

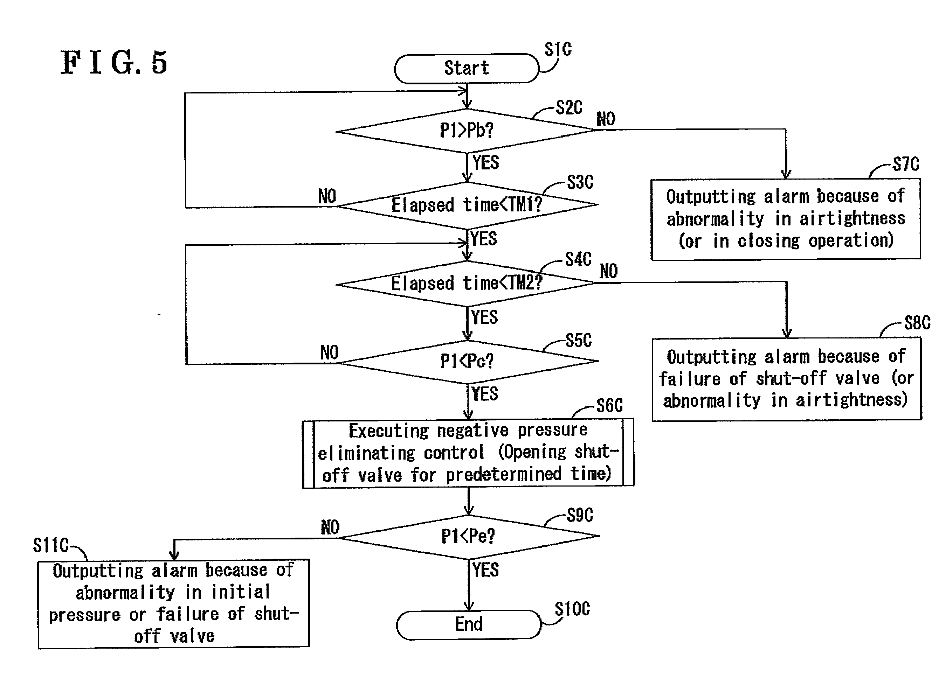

An eighth embodiment of the fuel cell system will be explained with reference to Fig. 5. Basically, the fuel cell system of the eighth embodiment includes similar advantages and effects and operation with the foregoing embodiments. Hereinafter, differences of the eighth embodiment from the foregoing embodiments will be mainly explained. Flowchart shown in Fig. 5 is similar to the flowcharts in Figs. 3 and 4, and in order to differentiate steps in Fig. 5 from the steps in Figs. 3 and 4, character C is added to the numeral of Steps. As shown in Fig. 5, after determining that the shut-off valve 69 and the passage portion 6m are in normal condition, the controller 100 charges fuel gas with the initial pressure to the passage portion 6m by performing the negative pressure eliminating control, and thereafter, performs an abnormality determination at Step S9C. That is, in a case where the pressure P1 in the passage portion 6 does not return to the predetermined pressure Pe which is close to the initial pressure (No in Step S9C) even when the shut-off valve 69 (first shut-off valve 69f, second shut-off valve 69s) is opened by the negative pressure eliminating control, the controller 100 determines that the initial pressure (initial pressure of town gas) at an upstream side relative to the initial pressure valve 6y to be supplied to the fuel cell system declines due to, for example, a shut-off of a microcomputer meter. Otherwise, the controller 100 determines that the shut-off valve 69 (first shut-off valve 69f, second shut-off valve 69s) remains closed in spite of an output of a command to open the shut-off valve 69 (first shut-off valve 69f, second shut-off valve 69s). Then, the controller 100 sets a flag indicating the abnormality which indicates a possibility of an abnormality of an initial pressure, and outputs an alarm for the abnormality (Step S11C).

On the other hand, in a case where the first and second shut-off valves 69f, 69s are opened at the negative pressure eliminating control according to Step S6C, when the pressure P1 of the passage portion 6 returns to a pressure level higher than the predetermined pressure Pe having the pressure close to the initial pressure (Yes in Step S9C), the controller 100 determines that the initial pressure (initial pressure of the town gas) at the upstream side relative to the initial pressure valve 6y is normal, sets a normal flag indicating that the initial pressure is normal, and ends the flowchart in Fig. 5 (Step S10C).

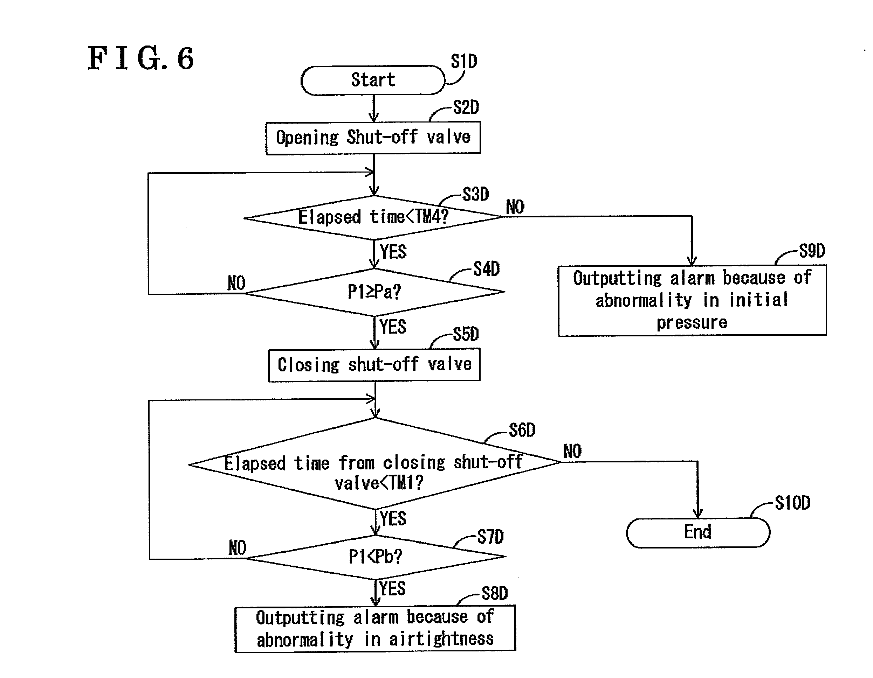

A ninth embodiment of the fuel cell system will be explained with reference to Fig. 6. Basically, the fuel cell system of the ninth embodiment includes similar advantages and effects and operation with the foregoing embodiments. Hereinafter, differences of the ninth embodiment from the foregoing embodiments will be mainly explained. Character D is added to reference numerals of Steps. As shown in Fig. 6, the control according to the ninth embodiment is executed during a stand-by mode (non-electric power generating state) of the fuel cell system, or immediately before activating the fuel cell system during a stand-by mode. In those circumstances, the control is executed in a state where the first gas pump 60 is stopped and the fuel gas is not supplied to the fuel cell system. Because the first gas pump 60 is stopped, the check valve 66 is closed. Upon an input of a command for executing the control to the controller 100 (Step S1 D), the control law is initiated. First, the controller 100 opens the shut-off valve 69 (Step S2D). Thus, the fuel gas (e.g., town gas) from the gas source 63 is charged into the passage portion 6m. Accordingly, the initial pressure of the fuel gas from the gas source 63 is applied to the passage portion 6m. The level of the pressure in the passage portion 6m is assumed to be the level equivalent to the initial pressure of the fuel gas from the gas source 63.

Next, the controller 100 determines whether the elapsed time from opening the shut-off valve 69 is shorter than a predetermined time TM4 (Step S3D). In a case where the elapsed time is shorter than the predetermined time TM4, the controller 100 determines whether the pressure P1 at the pressure sensor is higher than the predetermined pressure Pa (i.e., lower than the initial pressure and closer to the level of the initial pressure) after opening the shut-off valve 69 (Step S4D). In a case where the pressure P1 at the pressure sensor is assumed to be equal to or higher than the predetermined pressure Pa (P1≥Pa)(i.e., Yes at Step S4D), the initial pressure of the fuel gas is in a normal state and the fuel gas is airtightly enclosed in the passage portion 6m. Thereafter, the controller 100 closes the shut-off valve 69 (Step S5D).

In a case where the pressure P1 is lower than the predetermined pressure Pa (P1 <Pa) as a result of the determination in Step S4D, the transaction returns to Step S3D. In a case where the pressure P1 at the passage portion 6m does not exceed the predetermined pressure Pa after an elapse of the predetermined time TM4, it is considered that the initial pressure is low, or the shut-off valve 69 is not opened despite the command for opening the shut-off valve 69 and the pressure is not applied (failure in the shut-off valve 69). Thus, the controller 100 outputs an alarm as an occurrence of an abnormality, or a malfunction of the initial pressure (Step S9D).

As described above, after the shut-off valve 69 (first shut-off valve 69f, second shut-off valve 69s) is closed to airtightly enclose the fuel gas in the passage portion 6m (Step S5D), the controller 100 determines whether an elapsed time from the closed timing of the shut-off valve 69 (reference timing) is shorter than the predetermined time TM1 (Step S6D). In a case where the elapsed time is shorter than the predetermined time TM1, the transaction advances from Step S6D to Step S7D to determine whether the pressure P1 is lower than the predetermined pressure Pb (P1<Pb). In a case where the elapsed time is shorter than the predetermined time TM1 and the pressure P1 is lower than the predetermined pressure Pb (P1<Pb) (i.e., Yes at Step S7D), the controller 100 determines that the pressure in the passage portion 6m declines in a short period due to a leakage of the gas from the passage portion 6m to the outside, sets a flag indicating the abnormality, and outputs an alarm indicating an occurrence of an abnormality in airtightness (Step S8D).

On the other hand, in a case where the pressure P1 is assumed to be equal to or greater than the predetermined pressure Pb (P1≥Pb), the transaction by the controller 100 returns to Step S6D. In a case where the pressure P1 is equal to or greater than the predetermined pressure Pb (P1≥Pb) after an elapse of the predetermined time TM1 from the reference timing (No in Step S6D), the pressure P1 in the passage portion 6m is high, there is no leakage of the gas from the shut-off valve 69 and the passage portion 6m, and the airtightness of the passage portion 6m is maintained in a normal state. Thus, the controller 100 determines that the shut-off valve 69 and the passage portion 6m are in normal states, sets a normal flag to advance the transaction to Step S10D, and ends the control. In a case where it is determined that the shut-off valve 69 and the passage portion 6m are in normal states, the fuel cell system is activated to start the electric power generating operation upon a command for an activation, for example, from the controller 100 or a user.

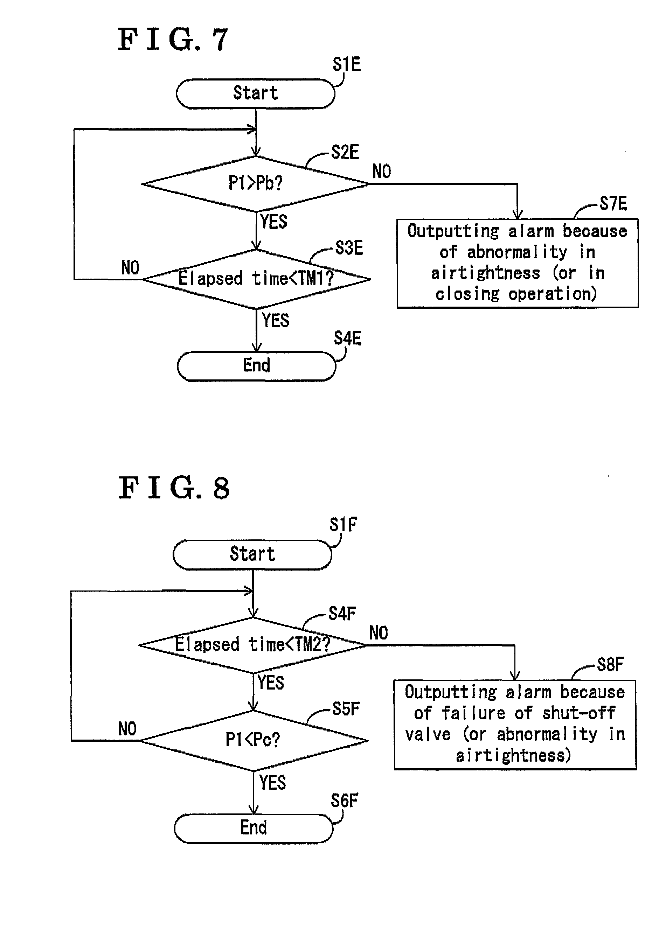

Tenth and eleventh embodiments are explained with reference to Fig. 7 and Fig. 8, respectively. Basically, the fuel cell system of the tenth and eleventh embodiments include similar advantages and effects and operation with the foregoing embodiments. A flowchart shown in Fig. 7 corresponds to Steps S1 to S7 in the flowchart shown in Fig. 3. A flowchart shown in Fig. 8 corresponds to Steps S4 to S8 in the flowchart shown in Fig. 3.

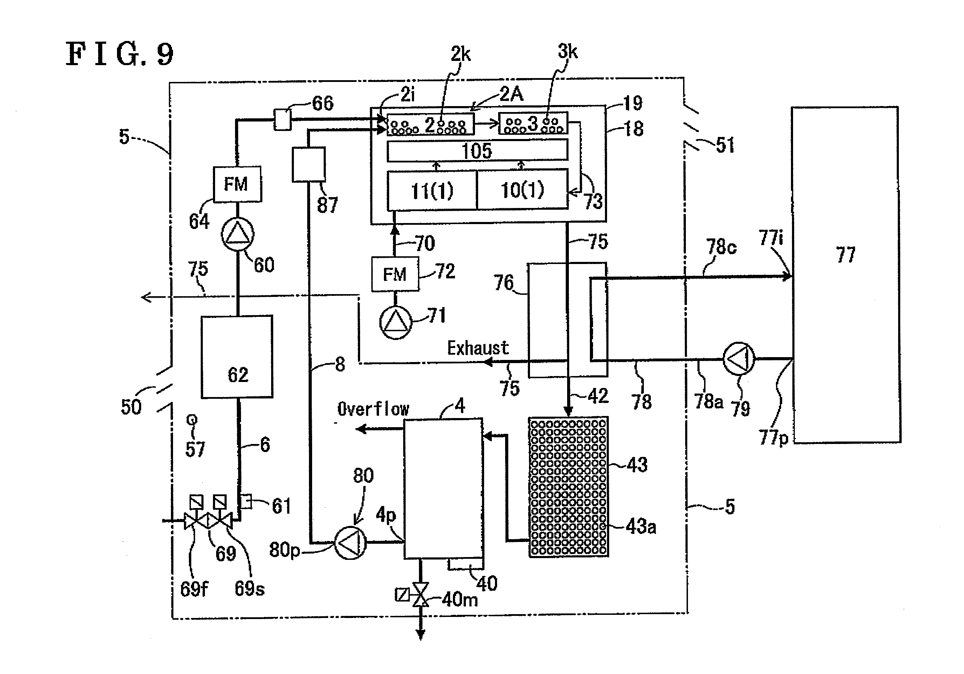

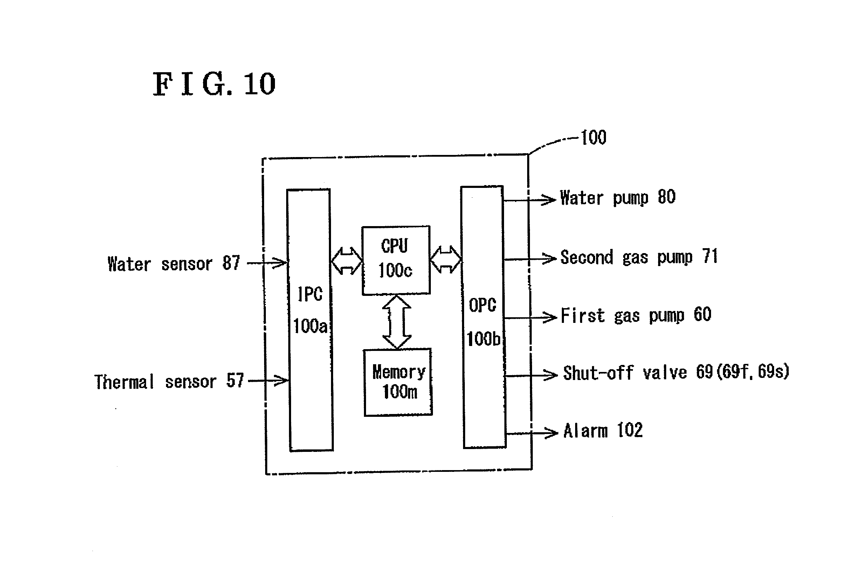

A twelfth embodiment will be explained with reference to Figs. 9 and 10. Basically, the fuel cell system of the twelfth embodiment includes similar advantages and effects and operation with the foregoing embodiments. Hereinafter, differences of the twelfth embodiment from the foregoing embodiments will be mainly explained. As shown in Fig. 9, the fuel cell system includes the fuel cell 1, the evaporating portion 2 generating a water vapor by evaporating the liquid-phase water, the reforming portion 3 forming an anode gas by reforming the fuel gas using the water vapor generated at the evaporating portion 2, a water tank 4 reserving the liquid-phase water to be supplied to the evaporating portion 2, and the case 5 housing the fuel cell 1, evaporating portion 2, the reforming portion 3, and the water tank 4. The fuel cell 1 includes the anode 10 and the cathode 11 which sandwich an ion conductor. For example, the fuel cell 1 is applicable to a solid oxide fuel cell (SOFC) whose operation temperature is, for example, equal to or higher than 400°C.

The reforming portion 3 is formed by supporting a reforming catalyst onto a ceramics carrier 3k, and is arranged adjoining the evaporating portion 2. The evaporating portion 2 includes a ceramics carrier 2k. The ceramics carriers 2k, 3k may be formed in a particle shape or in a honeycomb shape. The reforming portion 3 and the evaporating portion 2 structure the reformer 2A, and are surrounded by the thermal insulation wall 19 together with the fuel cell 1 to form the electric power generating module 18. During the electric power generating operation, the reformer 2A is heated within the thermal insulation wall 19 to be in an appropriate state for a reforming reaction. During the electric power generating operation, the evaporating portion 2 heats the water to produce the water vapor. A combusting portion 105 heats the reforming portion 3 and the evaporating portion 2. The fuel gas passage 6 for supplying the fuel from the gas source 63 to the reformer 2A includes the shut-off valve 69, the desulfurizer 62, the first gas pump 60, and the flow meter 64. The arrangement order of the shut-off valve 69, the desulfurizer 62, the first gas pump 60, and the flow meter 64 is not limited to the foregoing order. The cathode gas passage 70 for supplying the cathode gas (air) to the cathode 11 is connected to the cathode 11 of the fuel cell 1. The cathode pump (second gas pump) 71 serving as a gas conveying source for a cathode gas conveyance and a flow meter 72 are provided on the cathode gas passage 70.

As shown in Fig. 9, the case 5 includes an inlet port 50 and an outlet port 51 which are in communication with the outside air, and a thermal sensor 57 for detecting the temperature in the vicinity of the inlet port 50 (outside air). The thermal sensor 57 may be provided as necessity arises. The case 5 houses the water tank 4 for reserving the water for reforming which is in the liquid phase and which is reformed in the reforming portion 3. The water tank 4 is provided with a drain valve 40m. Further, the water tank 4 may be provided with a heating portion 40 having a heating function, for example, an electric heater. The heating portion 40 heats the water for reforming which is reserved in the water tank 4, and may be formed with, for example, an electric heater. For example, when an ambient temperature, for example, the outside air temperature is low, the heating portion 40 heats the water in the water tank 4 on the basis of a command from the controller 100 to be restrained from being frozen. In those circumstances, it is favorable that the water level is basically substantially constant.

As shown in Fig. 9, the water supply passage 8 which establishes the communication between an outlet port 4p of the water tank 4 and an inlet port 2i of the evaporating portion 2 is provided in the case 5 as a piping. As shown in Fig. 9, because the water tank 4 is positioned under the evaporating portion 2 in the case 5, the water supply passage 8 extends in an upward-downward direction. The water supply passage 8 is provided for supplying the water reserved in the water tank 4 to the evaporating portion 2 via the outlet port 4p of the water tank 4. The water supply passage 8 is provided with the water pump 80 for conveying the water in the water tank 4 to the evaporating portion 2. The water supply passage 8 is arranged to be in communication with the atmosphere, for example, via the evaporating portion 2, the reforming portion 3, and the fuel cell 1.

On the water supply passage 8, a water sensor 87 is provided at a downstream of the water pump 80 and at an upstream of the evaporating portion 2. The water sensor 87 may be positioned on the water supply passage 8 immediately close to the inlet port 2i of the evaporating portion 2 at an upstream side without interference of another part therebetween. A flow meter for measuring flow of the water for reforming is not provided at the water supply passage 8. Alternatively, in order to check a calculation result, a flow meter may be provided on the water supply passage.

As shown in Fig. 10, the controller 100 is provided for controlling the water pump 80 via a drive circuit. The controller 100 includes an input processing circuit (i.e., also referred to as IPC) 100a, an output processing circuit (i.e., also referred to as OPC) 100b, a CPU 100c having a timer measurement function, and a memory 100m serving as a memory portion. Detection signals from the water sensor 87 and the thermal sensor 57 are inputted to the controller 100 as shown in Fig. 10. The controller 100 controls the water pump 80. Further, the controller 100 is configured to control the second gas pump 71, the first gas pump 60, the shut-off valve 69 (first shut-off valve 69f, second shut-off valve 69s), and the alarm 102 (see Fig. 8).

When performing the electric power generating operation of the fuel cell system, the controller 100 executes a warm-up operation prior to the electric power generating operation. During the warm-up operation, the controller 100 actuates the first gas pump 60 in a state where the shut-off valve 69 is open to supply the fuel gas to the combusting portion 105 via the fuel gas passage 6 and via the fuel cell 1 of the electric power-generating module 18. The controller 100 actuates the cathode pump 71 to supply the air to the combusting portion 105 via the cathode gas passage 70 and via the cathode 11 of the electric power-generating module 18. Because an ignition portion is ignited, the fuel gas (e.g., town gas) is combusted by the air in the combusting portion 105. By the continuation of the combustion, the reforming portion 3, the evaporating portion, and the fuel cell 1 are heated to be warmed-up by a combustion heat generated by the combusting portion 105. When the evaporating portion 2 is assumed to have equal to or higher than a predetermined temperature, the water pump 80 is actuated to supply the water for reforming to start the reforming reaction at the reforming portion 3. The reformed gas, which is reformed, and the cathode gas continue the combustion to continuously heat the reforming portion 3 and the fuel cell 1 to warm-up thereof. When the reforming portion 3, the evaporating portion 2, and the fuel cell 1 are heated to be in a predetermined temperature range, the controller 100 ends the warm-up operation and transits the operation to the electric power generating operation.

By the actuation of the water pump 80 by the controller 100, the water for reforming which is in the liquid-phase and reserved in the water tank 4 is conveyed through the water supply passage 8 via the outlet port 4p of the water tank 4 to be supplied to the evaporating portion 2 via the inlet port 2i. The water for reforming is heated at the evaporating portion 2 to be a water vapor. The water vapor moves to the reforming portion 3 together with the fuel supplied from the fuel gas passage 6. In the reforming portion 3, the fuel gas is reformed by the water vapor to be an anode gas (gas including hydrogen). The anode gas is supplied to the anode 10 of the fuel cell 1 via the anode gas passage 73. Further, the cathode pump 71 is actuated to supply the cathode gas (gas including oxygen, the air in the case 5) is supplied to the cathode 11 of the fuel cell 1 via the cathode gas passage 70. Thus, the fuel cell 1 generates the electric power. A cathode exhaust gas exhausted from the cathode 11 includes oxygen which is not consumed during the reaction for generating the electric power. An anode exhaust gas exhausted from the anode 10 includes hydrogen which is not consumed during the reaction for generating the electric power. Thus, during the electric power generating operation, the anode exhaust gas is combusted by the cathode exhaust gas at the combusting portion 105 to heat the reforming portion 3 and the evaporating portion 2 to be in an appropriate state for the reforming reaction.

During the warm-up operation and the electric power generating operation, the exhaust gas with high temperature which is generated at the electric power generating module 18 is exhausted to the outside of the case 5 via an exhaust gas passage 75. A heat exchanger 76 having a condensing function is provided at the exhaust gas passage 75. A warm water reserve passage 78 connected to a warm water reserve tank 77, and a warm water reserve pump 79 are provided. The warm water reserve passage 78 includes an outward passage 78a and a return passage 78c. Water with low temperature reserved in the warm water reverse tank 77 is outputted from an outlet port 77p of the warm water reserve tank 77 by the actuation of the warm water reserve pump 79, passes the outward passage 78a, reaches the heat exchanger 76, and is heated by the exhaust gas at the heat exchanger 76. The water heated at the heat exchanger 76 returns to the warm water reserve tank 77 via the return passage 78c and a return port 77i. Thus, the water in the warm water reserve tank 77 becomes warm water. The water vapor included in the exhaust gas is condensed at the heat exchanger 76 to be the condensed water. The condensed water flows, or drops to a water purification portion 43 by the gravity via a condensed water passage 42 extended from the heat exchanger 76. Thus, the water purification portion 43 and the water tank 4 are positioned under the electric power-generating module 18.

Because the water purification portion 43 includes a water depurant agent 43a, for example, ion exchange resin, impurities in the condensed water are removed. The water removed with the impurities is moved to the water tank 4 to be reserved as the water for reforming in the water tank 4. When the water pump 80 actuates in a normal operation, the water for reforming in the water tank 4 is supplied to the evaporating portion 2 with high temperature via the water supply passage 8, is transformed to be the water vapor in the evaporating portion 2 to be supplied to the reforming portion 3, and is consumed in a reforming reaction for reforming the fuel gas at the reforming portion 3. Generally, a water vapor reforming is expressed as following formula (1).

(1) CₙHₘ + nH₂O → nCO + [(m/2)+n] H₂

Here, n and m show particular integers. In a case where n equals to one (i.e., n = 1), and m equals to four (i.e., m =4), steam reforming of methane (CH₄) is achieved.

According to this embodiment, when the controller 100 changes the operation modes from the electric power generating operation mode to the stop mode, when the controller 100 maintains the stop mode (in those circumstance, the first gas pump 60 is stopped), or when the stand-by mode is maintained, the controller 100 can execute the determination processing. In those modes, because the first gas pump 60 is stopped, the check valve 66 is closed, and the fuel cell 1 is not in the electric power generating operation, a time required for determination processing is not limited, thus the number of repetition for the determination processing can be incremented to enhance the precision of the determination.

At least one of when executing the determination processing, at immediately after executing the determination processing, and at immediately before executing the determination processing, and when the fuel gas moves to the electric module 18 side, it is favorable that the controller 100 actuates the second gas pump 70 to supply the air in the case 5 to the cathode gas passage 70 to attenuate the fuel gas with the air. In a case where the abnormality, or an occurrence of the failure is determined at the determination processing during the electric power generating operation is not conducted, a defect, or the failure of the shut-off valve 69 and the fuel gas passage 6 can be repaired by the next activation of the fuel cell system.

The disclosure of the fuel cell system is not limited to the foregoing embodiments, and can be varied within a scope of the invention. For example, the fuel cell system may not include the flow meter 64 and the buffer tank 65 which are provided on the fuel gas passage 6 shown in Figs. 1 and 2.

Types of the fuel cell are not limited to the solid oxide fuel cell (SOFC). For example, a polymer electrolyte fuel cell (PEFC), a phosphoric acid fuel cell, molten-carbonate fuel cell (MCFC), and other types of the fuel cell are applicable. According to the foregoing embodiments, the heating portion 40 is provided at the water tank 4. However, alternatively, the heating portion 40 may be removed. The first gas-conveying source is not limited to the first gas pump 60. For example, a fan, or a compressor may be applied as the first gas-conveying source. Namely, as long as conveying fuel gas, another means can be applied as the first gas-conveying source. The second gas-conveying source is not limited to the second gas pump 71. For example, a fan, or a compressor may be applied as the second gas-conveying source. As long as conveying fuel gas, another means can be applied as the second gas-conveying source. A single valve or double valves may be applied as the shut-off valve 69. The position of the pressure sensor 61 is not limited to the embodiments. For example, the pressure sensor 61 may be positioned between the desulfurizer 62 and the flow meter 64, or between the gas pump 60 and the desulfurizer 62. According to the embodiments, the fuel cell system is applied to a stationary fuel cell system. However, the application of the fuel cell system is not limited, and may be applied to a fuel cell system which does not include a desulfurizer, or may be applied to a fuel cell system mounted to a vehicle and having a fuel tank charged with an anode gas, which is hydrogen gas, as a gas source.

A control method for a fuel cell system, which includes a fuel cell including an anode and a cathode, a cathode gas passage for supplying a cathode gas to the cathode of the fuel cell, a fuel gas passage for supplying a fuel gas of a gas source to the anode of the fuel cell, a first gas conveying source provided at the fuel gas passage, a shut-off valve provided on the fuel gas passage at an upstream of the first gas conveying source, the shut-off valve for opening and closing, an opening-and-closing valve provided on the fuel gas passage at a downstream of the shut-off valve and the first gas conveying source, the opening-and-closing valve for opening and closing, a pressure detection element for detecting a physical quantity related to a gas pressure at a passage portion defined on the fuel gas passage between the shut-off valve and the opening-and-closing valve, and a control portion to which a detection signal of the pressure detection element is inputted and controls the first gas conveying source, the shut-off valve, and the opening-and-closing valve. According to the control method for the fuel cell system, after supplying the fuel gas from the gas source to the fuel gas passage by opening the shut-off valve, the passage portion defined on the fuel gas passage between the shut-off valve and the opening-and-closing valve is airtightly closed by closing the shut-off valve and the opening-and-closing valve in a state where the first gas conveying source is stopped, thereafter, a determination processing for determining airtightness of the passage portion, a closing function of the opening-snd-closing valve, and a closing function of the shut-off valve are performed on the basis of an elapsed time elapsed from a reference timing related to confining the fuel gas in the passage portion and a fluctuation of the pressure detected by the pressure detection element.

A fuel cell system, which includes a fuel cell including an anode and a cathode, a cathode gas passage for supplying a cathode gas to the cathode of the fuel cell, a fuel gas passage for supplying a fuel gas of a gas source to the anode of the fuel cell, a first gas conveying source provided at the fuel gas passage, a shut-off valve provided on the fuel gas passage at an upstream of the first gas conveying source, the shut-off valve for opening and closing, an opening-and-closing valve provided on the fuel gas passage at a downstream of the shut-off valve and the first gas conveying source, the opening-and-closing valve for opening and closing, a pressure detection element for detecting a physical quantity related to a gas pressure at a passage portion defined on the fuel gas passage between the shut-off valve and the opening-and-closing valve, and a control portion to which a detection signal of the pressure detection element is inputted and controls the first gas conveying source, the shut-off valve, and the opening-and-closing valve. After supplying the fuel gas from the source gas to the fuel gas passage by opening the shut-off valve, the control portion controls the shut-off valve and the opening-and-closing valve to close in a state where the first gas conveying source is stopped to airtightly close the passage portion defined on the fuel gas passage between the shut-off valve and the opening-and-closing valve, thereafter performs a determination processing for determining whether a closing performance of the shut-off valve and an airtightness of the passage portion are normal on the basis of an elapsed time elapsed from a reference timing related to an airtight enclosing of the fuel gas to the passage portion by closing both of the shut-off valve and the opening-and-closing valve and a fluctuation of a pressure detected by the pressure detection element, and determines that the closing performance (function) of the shut-off valve is normal and the airtightness of the passage portion is normal when a pressure in the passage portion detected by the pressure detection element declines to be lower than a predetermined pressure Pc at the predetermined time TM2 (TM2>TM1) from the reference timing during the determination processing. In those circumstances, when the pressure in the passage portion does not decline to be lower than the predetermined pressure Pc at an elapse of the predetermined time TM2 (TM2>TM1) from the reference timing, it is assumed that the outside air enters the passage portion, and the control portion determines that the closing performance (function) of the shut-off valve is abnormal (fails); or the airtightness at the passage portion is abnormal (fails). In a case where the closing performance (function) of the shut-off valve is normal and the airtightness at the passage portion is normal, the passage portion is cooled along with the declination of the temperature of the fuel cell so that the pressure level is reduced (to have a negative pressure). In a case where the closing performance (function) of the shut-off valve is not normal and/or the airtightness at the passage portion is not normal, the pressure level in the passage portion is not reduced (does not have negative pressure) because of the outside air entering the passage portion even if the thermal contraction of the fuel gas occurs because the passage portion is cooled along with the declination of the temperature of the fuel cell.

A fluctuation of the pressure includes a decrease of the pressure and an increase of the pressure in accordance with an elapsed time from the reference timing. In a case where the elapsed time from the reference timing is short, a decrease of the pressure corresponds to a gas leakage from the passage portion, thus corresponds to an abnormality, or failure of the airtightness. A long elapsed time from the reference timing indicates that a pressure which is supposed to be reduced by closing the shut-off valve is not reduced and corresponds to a state where the shut-off valve is not closed, which corresponds to an abnormality, or failure of the shut-off valve.

According to the construction of the disclosure, the control portion opens the shut-off valve and the opening-and-closing valve to supply the fuel gas from the gas source to the fuel gas passage. In those circumstances, the control portion airtightly closes the passage portion at the fuel gas passage between the shut-off valve and the open ing-and-closing valve by closing the shut-off valve and by closing the opening-and-closing valve to airtightly enclose the fuel gas within the passage portion. In a case where the airtightness of the passage portion and the closing function of the opening-and-closing valve are not impaired (do not fail), the fuel gas with high pressure charged into the passage portion does not leak to the outside, and a fluctuation (decrease) of the pressure detected by the pressure detection element can be restrained. However, in a case where the closing function of the opening-and-closing valve is impaired (fails), or in a case where the airtightness of the passage portion is impaired (fails), the fuel gas with high pressure charged into the passage portion leaks to the outside. Thus, as a time elapses from the reference timing, the pressure detected by the pressure detection element fluctuates (declines).

Accordingly, according to the construction of the disclosure, whether the closing function of the opening-and-closing valve and the airtightness of the passage portion function as normal, or function properly can be determined on the basis of the elapsed time elapsed from the reference timing and the fluctuation of the pressure detected by the pressure detection element.

Further, in a case where the pressure does not decline although the elapsed time is long, the pressure reduces in response to a decrease of the temperature in a piping as long as the airtightness is ensured in the aritightly closed state by the shut-off valve. On the other hand, when the closing function of the shut-off valve is abnormal (fails), the pressure does not reduce due to an application of the initial pressure of the fuel in the piping. That is, the pressure does not fluctuate as an elapse of the reference timing. Accordingly, whether closing function of the shut-off valve is normal (proper) can be determined on the basis of the fluctuation of the pressure detected by the pressure detection element from the reference timing.

The reference timing is defined on the basis of a timing when the fuel gas is airtightly enclosed in the passage portion by airtightly closing the passage portion defined on the fuel gas passage between the shut-off valve and the opening-and-closing valve. The reference timing may be set on the basis of a timing when the shut-off valve is closed. Further, when a state of the fuel cell system is changed from an electric power generating operation state to a stop state, a command for stopping the electric power generating operation is outputted from the control portion or from a user, and a command for closing at least the shut-off valve is outputted from the control portion. Thus, in order to close the shut-off valve, the reference timing may be set on the basis of a timing when the command for stopping the electric power generating operation is outputted. Alternatively, when the determination processing is performed immediately before activating the fuel cell system for the electric power generating operation, the reference timing may be set on the basis of a timing when outputting a command for closing the shut-off valve after once opening the shut-off valve to supply the fuel gas to the passage portion.

In a case where it is not determined that the state of the shut-off valve and the passage portion is normal in the determination processing, the control portion may output an alarm. An alarm to, for example, a user may be applied as the alarm. Alternatively, stopping operation of the fuel cell system may be applied as the alarm. Any structure which detects a physical quantity related to a gas pressure at the passage portion defined on the fuel gas passage between the shut-off valve and the first gas conveying source may be applied as the pressure detection element For example, a pressure sensor, or a pressure switch may be applied as the pressure detection element. Any structure which conveys the fuel gas may be applied as the first gas-conveying source. For example, a pump, a fan, or a compressor may be applied as the first gas-conveying source. A type of the fuel cell applied to the fuel cell system is not limited to the solid oxide fuel cell (SOFC). For example, a polymer electrolyte fuel cell (PEFC), a phosphoric acid fuel cell, molten-carbonate fuel cell (MCFC), and other types of the fuel cell may be applicable.

According to the construction of the fuel cell system, the determination processing is executed when the operation state of the fuel cell is switched from the electric power generating operation state to the stop state, or when the stop state of the electric power generating operation continues. When the operation of the fuel cell is switched from the electric power generating operation to the stop state, in order to stop the conveyance of the fuel gas, a state of the first gas-conveying source is changed from an actuation state to the stop state. Thus, the determination processing may be readily executed without affecting the electric power generating operation of the fuel cell.

According to the construction of the fuel cell system, when the pressure at the passage portion detected by the pressure detection element declines to be lower than the first predetermined pressure within the first predetermined time from the reference timing during the determination processing, the control portion determines that the closing function of the opening-and-closing valve is in failure (abnormal), or the airtightness in the passage portion is failed (abnormal). Because the closing function of the opening-and-closing valve is in failure (abnormal)(e.g., the opening-and-closing valve does not completely close), or because the airtightness at the passage portion is failed (abnormal)(e.g., gas leakage from a wall forming the passage portion), the pressure in the passage portion leaks to the outside (e.g., atmosphere) to decline the pressure level. Thus, considering not to have an erroneous detection during the time in which the pressure in the passage portion whose pressure level is higher than the atmosphere leaks outside (e.g., atmosphere) to decline the pressure level, the first predetermined pressure and the first predetermined time are set in accordance with a fuel cell system. For example, the first predetermined time may be determined as a value within 10 to 300 seconds, however, is not limited to the foregoing value. The first predetermined pressure may be determined as a value ranged between an initial pressure of the source gas and the atmosphere.

According to the construction of the fuel cell system, in response to the electric power generating operation of the fuel cell the temperature of the fuel cell is raised to be higher than the normal temperature region, and when the pressure in the passage portion detected by the pressure detection element declines to be lower than the second predetermined pressure at an elapse of the second predetermined time from the reference timing during the determination processing, it is determined that the closing function of the shut-off valve is normal and the airtightness at the passage portion is normal. In those circumstances, the second predetermined time is longer than the first predetermined time.

During the electric power generating operation, the temperature at the fuel cell is assumed to be higher than the temperature in the normal temperature region. When the electric power generating operation is stopped, the temperature at the fuel cell gradually declines as a time elapses. Thus, in a state where the shut-off valve and the opening-and-closing valve are open and the fuel gas from the gas source is supplied to the fuel gas passage, by the closing operation of the shut-off valve and the opening-and-closing valve, the fuel gas is enclosed in the airtightly closed passage portion provided on the fuel gas passage between the shut-off valve and the opening-and-closing valve. When a time elapses from the reference timing after the fuel gas is airtightly enclosed in the passage portion, because the temperature at the fuel cell gradually declines, the pressure in the passage portion is supposed to be reduced on the basis of the thermal contraction of the fuel gas in the passage portion (e.g., to have the negative pressure). Accordingly, in a case where the closing function of the shut-off valve is normal and the airtightness at the passage portion is normal, the pressure in the passage portion detected by the pressure detection element declines to be lower than the second predetermined pressure at an elapse of the second predetermined time from the reference timing (here, the second predetermined time is longer than the first predetermined time). In those circumstances, the control portion determines that the closing function of the shut-off valve and the airtightness of the passage portion are normal.

On the other hand, in a case where the closing function of the shut-off valve is in failure (abnormal) and the shut-off valve cannot be closed despite the output of the closing command, the fuel with the initial pressure enters the passage portion. Thus, the pressure in the passage portion detected by the pressure detection element does not decline to be lower than the second predetermined pressure at an elapse of the second predetermined time from the reference timing (here, the second predetermined time is longer than the first predetermined time). The second predetermined pressure can be set in accordance with a system as a pressure with level lower than the initial pressure of the fuel. In those circumstances, the control portion determines that the shut-off valve is in failure (abnormal). For example, the second predetermined time can be set considering a time which allows the temperature in the passage portion to be declined from the temperature during the electric power generating operation to the temperature in the normal region so that the pressure is adequately reduced. The second predetermined time may be set within a range from 0.5 to 10 hours. Here, the second predetermined time is greater than the first predetermined time.

According to the construction of the fuel cell system, the shut-off valve includes the first shut-off valve positioned at the upstream and the second shut-off valve positioned at the downstream, which are arranged in series on the fuel gas passage adjacent to each other. In other words, double valves are provided. The control portion executes the first determination processing for determining whether the airtightness in the passage portion and the closing function of one of the first shut-off valve and the second shut-off valve function as normal (function properly). Thereafter, the control portion executes the second determination processing for determining whether the airtightness in the passage portion and the closing function of the other one of the first shut-off valve and the second shut-off valve function as normal (function properly). Thus, the airtightness in the passage portion is double-checked.

According to the construction of the fuel cell system, the control portion executes the determination processing when the opening-and-closing valve is closed and before the activation where the first gas conveying source is stopped and the fuel cell is not generating the electric power. According to the construction of the disclosure, the control portion determines whether the closing function of the shut-off valve and the airtightness in the passage portion function as normal before activating the fuel cell system.

According to the construction of the fuel cell system, when the determination processing determines that at least one of the closing function of the shut-off valve, the closing function of the opening-and-closing valve, and the airtightness of the passage portion fails, there is a possibility that an external object is jammed at the opening-and-closing valve so that the opening-and-closing valve cannot be completely closed and the airtightness of the opening-and-closing valve is declined. In order to resolve the drawback, the control portion re-executes the command for alternately repeating the opening and closing of the shut-off valve for plural times. By the execution of alternately repeating the opening and closing of the shut-off valve for plural times, the external object jammed at the opening-and-closing valve is likely to be removed, and a possibility that the opening-and-closing valve returns to the normal state is assumed to be high.
A fuel cell system includes a control portion. (100) which airtightly closes a passage portion (6m) provided on a fuel gas passage (6) between a shut-off valve (69, 69f, 69s) and an opening-and-closing valve (66) by closing the shut-off valve (69, 69f, 69s) and the opening-and-closing valve (66) in a state where a fuel gas from a gas source (63) is supplied to the fuel gas passage (6) by opening the shut-off valve (69, 69f, 69s) and the opening-and-closing valve (66). Thereafter, the control portion (100) performs a determination processing for determining whether a closing function of the shut-off valve (69, 69f, 69s), a closing function of the opening-and-closing valve (66), and an airtightness of the passage portion (6m) function as normal on the basis of an elapsed time elapsed from a reference timing related to the closing of the both of the shut-off valve (69, 69f, 69s) and the opening-and-closing valve (66) and a fluctuation of the pressure detected by the pressure detection element in a state where the first gas conveying source (60) is stopped.

## Claims

1. A fuel cell system, comprising:
a fuel cell (1) including an anode (10) and a cathode (11);
a cathode gas passage (70) supplying a cathode gas to the cathode (11) of the fuel cell (1);
a fuel gas passage (6) supplying a fuel gas of a gas source (63) to the anode (10) of the fuel cell (1);
a first gas-conveying source (60) provided at the fuel gas passage (6);
a shut-off valve (69, 69f, 69s) positioned on the fuel gas passage (6) at an upstream of the first gas conveying source (60), the shut-off valve (69, 69f, 69s) selectively opening and closing;
an opening-and-closing valve (66) provided on the fuel gas passage (6) at a downstream of the shut-off valve (69, 69f, 69s) and the first gas conveying source (60), the opening-and-closing valve (66) selectively opening and closing;
a pressure detection element (61) for detecting a physical quantity related to a gas pressure in a passage portion (6m) provided on the fuel gas passage (6) between the shut-off valve (69, 69f, 69s) and the opening-and-closing valve (66);
a control portion (100) to which a detection signal from the pressure detection element (61) is inputted and directly or indirectly controlling the first gas conveying source (60), the shut-off valve (69, 69f, 69s) and the opening-and-closing valve (66); wherein
the control portion (100) performs a determination processing for determining whether a closing function of the shut-off valve (69, 69f, 69s), a closing function of the opening-and-closing valve (66), and an airtightness of the passage portion (6m) function as normal; and wherein
in the determination processing, the control portion (100) airtightly closes the passage portion provided on the fuel gas passage (6) between the shut-off valve (69, 69f, 69s) and the opening-and-closing valve (66) by closing the shut-off valve (69, 69f, 69s) and the opening-and-closing valve (66) to enclose the fuel gas in the passage portion (6m) after supplying the fuel gas from the gas source (63) to the fuel gas passage (6) by opening the shut-off valve (69, 69f, 69s) in a state where the first gas conveying source (60) is stopped, and thereafter determines whether the closing function of the shut-off valve (69, 69f, 69s), the closing function of the opening-and-closing valve, and the airtightness of the passage portion (6m) function as normal on the basis of an elapsed time elapsed from a reference timing related to the closing of the both of the shut-off valve (69, 69f, 69s) and the opening-and-closing valve (66) and a fluctuation of the pressure detected by the pressure detection element in a state where the first gas conveying source (60) is stopped.

2. The fuel cell system according to claim 1, wherein the determination processing is executed when an operation state is transited from an electric power generating operation of the fuel cell (1) to a stopped state, or when a stopped state of an electric power generating operation of the fuel cell (1) continues.

3. The fuel cell system according to either claim 1 or 2, wherein the control portion determines that the closing function of the opening-and-closing valve (66) fails or the airtightness of the passage portion (6m) fails when a pressure in the passage portion (6m) detected by the pressure detection element (61) declines to be lower than a first predetermined pressure (Pb) within a first predetermined time (TM1) from the reference timing in the determination processing.

4. The fuel cell system according to either claim 1 or 2, wherein a temperature at the fuel cell (1) is assumed to be higher than a temperature in a normal temperature region in response to an electric power generating operation and when the pressure in the passage portion (6m) detected by the pressure detection element (61) declines to be lower than a second predetermined pressure (Pc) at a second predetermined time (TM2) from the reference timing in the determination processing, the control portion (100) determines that a closing function of the shut-off valve (69, 69f, 69s) functions as normal and an airtightness of the passage portion (6m) is in a normal state.

5. A fuel cell system according to any one of claims 1 to 4, wherein the shut-off valve (69, 69f, 69s) includes a first shut-off valve (69f) provided at an upstream side and a second shut-off valve (69s) provided at a downstream side, the first and second shut-off valves (69f, 69s) provided on the fuel gas passage (6) in series adjacent each other;
the control portion (100) airtightly closes a first passage portion (6m) provided on the fuel gas passage (6) between the opening-and-closing valve (66) and one of the first and second shut-off valves (69f, 69s) to enclose the fuel gas into the passage portion (6m) by closing said one of the first and second shut-off valves (69f, 69s) and the opening-and-closing valve (66) in a state where the first and second shut-off valves (69f, 69s) and the opening-and-closing valve (66) are open and the fuel gas from the gas source (63) is supplied to the fuel gas passage (6), thereafter, executes a first determination processing for determining whether a closing function of said one of the first and second shut-off valves (69f, 69s), the closing function of the opening-and-closing valve (66), and an airtightness of the first passage portion (6m) function as normal on the basis of an elapsed time elapsed from the reference timing and a fluctuation of a pressure detected by the pressure detection element (61), the control portion (100) further airtightly closes a second passage portion (6m) provided on the fuel gas passage (6) between the opening-and-closing valve (66) and the other of the first and second shut-off valves (69f, 69s) to enclose the fuel gas in the second passage portion (6m) by closing the opening-and-closing valve (66) and by closing the other of the first and second shut-off valves (69f, 69s) in a state where the first and second shut-off valves (69f, 69s) are open and fuel gas from the gas source (63) is supplied to the fuel gas passage (6), and thereafter executes a second determination processing for determining whether a closing function of said the other of the first and second shut-off valves (69f, 69s), the closing function of the opening-and-closing valve (66), and an airtightness of the second passage portion function as normal on the basis of an elapsed time elapsed from the reference timing and a fluctuation of a pressure in the second passage portion (6m) detected by the pressure detection element (61).

6. The fuel cell system according to any one of claims 1 to 5, wherein the control portion (100) executes the determination processing when the opening-and-closing valve (66) is closed, the first gas conveying source (60) is stopped, and before an activation of the fuel cell (1) where the fuel cell (1) is not generating an electric power.

7. The fuel cell system according to any one of claims 1 to 6, wherein the control portion (100) outputs a command for alternately repeating the opening and closing of the shut-off valve (69, 69f, 69s) for plural times to the shut-off valve (69, 69f, 69s) when the determination processing determines that at least one of the closing function of the shut-off valve (69, 69f, 69s), the closing function of the opening-and-closing valve, and the airtightness of the passage portion (6m) fails, and thereafter the control portion (100) re-executes the determination processing.
